# EUROPEAN PATENT APPLICATION

(11) **EP 2 993 906 A1**
(43) Date of publication of application: **09.03.2016**
(21) Application number: 14188491.6
(22) Date of filing: 10.10.2014
(51) Int. Cl.: H04N 21/431, G06F 3/048, G06F 17/30

(54) **Method and device for displaying a plurality of videos**

(30) Priority: 05.09.2014 EP 14306374
(71) Applicant: Thomson Licensing, 92130 Issy-les-Moulineaux (FR)
(72) Inventor: Crivelli, Tomas Enrique, 35576 Cesson-Sévigné (FR); Thudor, Franck, 35576 Cesson-Sévigné (FR); Exposito, Marta, 35576 Cesson-Sévigné (FR)
(74) Representative: Rolland, Sophie

(57) **Abstract**

A method for displaying a plurality of videos on a screen is disclosed. The method comprises:
- displaying a main video in a main graphical unit;
- displaying at least one secondary video among said plurality of videos in at least one secondary graphical unit;
wherein at least a characteristic of said at least one secondary graphical unit among size, structure, position, transparency, overlap with main graphical unit depends on information representative of spatio-temporal connectivity between a main video segment currently displayed and the at least a secondary video segment currently displayed.

## Description

### 1. FIELD OF THE INVENTION

In the following, a multi-video player is disclosed. Specifically, a method for displaying a plurality of videos is disclosed comprising displaying videos with respect to their space and time relationship. Corresponding device is also disclosed.

### 2. BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Given the ubiquitous camera devices at hand for practically everybody and the facilities to share media in social networks, the amount of video data around us is growing faster and faster. However, navigation systems for these data have not evolved very much over the years. We still have to change from one video to another manually and, when we have thousands of videos from an event, this could become a tough task. Moreover, the average user has difficulties to find what he wants to see and to see all that may interests him.

A method, known to a person skilled in the art, for displaying several videos at the same time in a manner such that the user can explore the collection with the help of the system learned relations is the wall of videos. The viewing area is divided into several windows and a video is displayed in each window such as in the wall of videos from a concert's synchronized videos. However, it is difficult for a user to draw attention on multiple videos at the same time and the setting is static i.e. a same video of a same point of view is continuously displayed in the same window.

Other prior art either neglects the link between the videos, for example using a file navigation system as the file explorer on your favourite OS, or needs some GPS information relative to space and time localisation to present videos according to their relationship.

Thus an enhanced method for displaying, at the same time, multiple videos among a collection of videos, while dynamically visualising some spatial and temporal information between the multiple videos is therefore needed.

### 3. BRIEF SUMMARY OF THE INVENTION

A salient idea is to display a principal video at the center of the screen, in high resolution with no deformation and, to dynamically have a secondary linked video (or many secondary videos) appearing with respect to the temporal instant of appearance of the link and with respect to the relative spatial position of this secondary video. The size, resolution and shape of the secondary videos are defined to limit the disturbance of the principal video watching, letting the user know there is a potential link towards another video. The number of secondary videos is limited for a dedicated screen. The user can at every instant, select a secondary video which becomes the principal one, displaying it in the center along with its linked secondary videos.

To that end, a method for displaying a plurality of videos is disclosed. The method comprises:
- displaying a main video in a main graphical unit;
- displaying at least one secondary video among the plurality of videos in at least one secondary graphical unit; wherein at least a characteristic of said at least one secondary graphical unit among size, structure, position, transparency, overlap with main graphical unit depends on information representative of spatio-temporal connectivity between a main video segment currently displayed and the at least a secondary video segment currently displayed.
Advantageously, while providing information about spatial and temporal relationships from the main video, the user viewing experience is less perceptually disturbed by the secondary videos than in the video wall. Besides the invention, allows the navigation within a collection of videos in a different manner than just a file explorer.

According to a specific characteristic, said characteristic of said at least one secondary graphical unit further depend on a maximum number of graphical units; advantageously, the graphical interface of such a multi-video player is adapted to the size of the display on which the graphical interface is presented.

According to another specific characteristic, the information representative of spatio-temporal connectivity comprises a connectivity score and the size of the secondary graphical unit increases when the connectivity score increases. Advantageously the level of importance of the link is therefore intuitively rendered to a viewer.

According to another specific characteristic, the information representative of spatio-temporal connectivity comprises a relative spatial position between the main and secondary video segment and the relative spatial position between the main graphical unit and the secondary graphical unit corresponds to the relative spatial position between the main and secondary video segment. Such spatial information is based on the video content, for instance by finding a left or right view of the current scene of the main video. Advantageously, further to the temporal and relevance information of the link, the spatial information is therefore rendered to a viewer. According to another specific characteristic, the information representative of spatio-temporal connectivity comprises a connectivity score and the transparency of a secondary graphical unit decreases when the connectivity score increases.

According to another specific characteristic, the information representative of spatio-temporal connectivity comprises a connectivity score and the overlap of a secondary graphical unit with the main graphical unit decreases when the connectivity score increases.

According to another specific characteristic, the information representative of spatio-temporal connectivity comprises a connectivity score and the secondary graphical unit is placed closer to the main graphical unit when the connectivity score increases.

According to another specific characteristic, the size, structure and position of the graphical units (main and second) are quantified, thus secondary graphical units appear and disappear at fixed position according to existence and relevance of the links.

According to another specific characteristic, at least a characteristic of the at least one secondary graphical unit continuously varies from a first characteristic corresponding to a first information to a second characteristic corresponding to a second information. Thus, smooth and dynamic positioning of links on the displayed video (both temporally and spatially) towards other videos of the collection is allowed.

According to others specific characteristics, the main graphical unit is centered in the display, the main graphical unit has a higher size than the at least one secondary graphical unit, the main graphical unit is placed in front of the at least one secondary graphical unit.

A graphical interface for displaying a plurality of videos on a display means is disclosed. The graphical interface comprises:
- a main graphical unit displaying a main video;
- at least a secondary graphical unit, each secondary graphical unit displaying a secondary video among said plurality of videos ;
wherein at least a characteristic of said at least one secondary graphical unit among size, structure, position, transparency, overlap with main graphical unit depends on information representative of spatio-temporal connectivity between a main video segment currently displayed and at least a secondary video segment currently displayed.

A device for displaying a plurality of videos on a screen is disclosed. The device comprises at least one processor configured to:
- display a main video in a main graphical unit;
- display at least a secondary video among said plurality of videos in at least a secondary graphical unit;
wherein at least a characteristic of said at least one secondary graphical unit among size, structure, position, transparency, overlap with main graphical units depends on information representative of spatio-temporal connectivity between a main video segment currently displayed and said at least a secondary video segment currently displayed.

A device for comprising at least one face on a display means is disclosed. The device comprises:
- means for (12) displaying a main video in a main graphical unit;
- means for (18) displaying at least a secondary video among said plurality of videos in at least a secondary graphical unit;
wherein it further comprises means for (16) determining at least a characteristic of said at least one secondary graphical unit among size, structure, position, transparency, overlap with main graphical unit as a function of information representative of spatio-temporal connectivity between a main video segment currently displayed and at least a secondary video segment currently displayed.

A computer program product comprising program code instructions to execute of the steps of the displaying method according to any of the embodiments and variants disclosed when this program is executed on a computer.

A processor readable medium having stored therein instructions for causing a processor to perform at least the steps of the displaying method according to any of the embodiments and variants disclosed.

According to another aspect a method, performed by a computer, for obtaining information representative of spatial connectivity between a first video and a second video from a transformation between a key frame of said first video and a key frame of said second video is disclosed. The method comprises:

Obtaining a number of overlapping pixels between a transformed key frame of said second video and said key frame of said first video in a subdivision of said key frame of said first video wherein said subdivision of said key frame corresponds to a spatial direction;

Obtaining said information representative of spatial connectivity between a first video and a second video from said number of overlapping pixels in each subdivision.

### 4. BRIEF DESCRIPTION OF THE DRAWINGS

In the drawings, an embodiment of the present invention is illustrated. It shows:
- **Figure 1** depicts a processing device for displaying multiple videos according to a specific and non-limitative embodiment of the invention;
- **Figure 2** represents an exemplary architecture of the processing device of figure 1 according to a specific and non-limitative embodiment of the invention;
- **Figure 3** represents a flowchart of a method for displaying multiple videos according to a specific and non-limitative embodiment of the invention;
- **Figure 4** represents an interpretation of the transform through space quantization to obtain a relative positioning of two images according to a specific and non-limitative embodiment of the invention;
- **Figure 5** represents a detail of the flowchart depicted on figure 3 according to a specific and non-limitative embodiment of the invention;
- **Figure 6** represents a detail of the flowchart depicted on figure 3 according to a specific and non-limitative embodiment of the invention;
- **Figure 7** represents a user interface for displaying a video with temporal and spatial connectivity information according to a specific embodiment of the invention;
- **Figures 8****,** **9****,** **10** represent a user interface for displaying multiple videos according to various embodiments of the invention.

### 5. DETAILED DESCRIPTION OF THE INVENTION

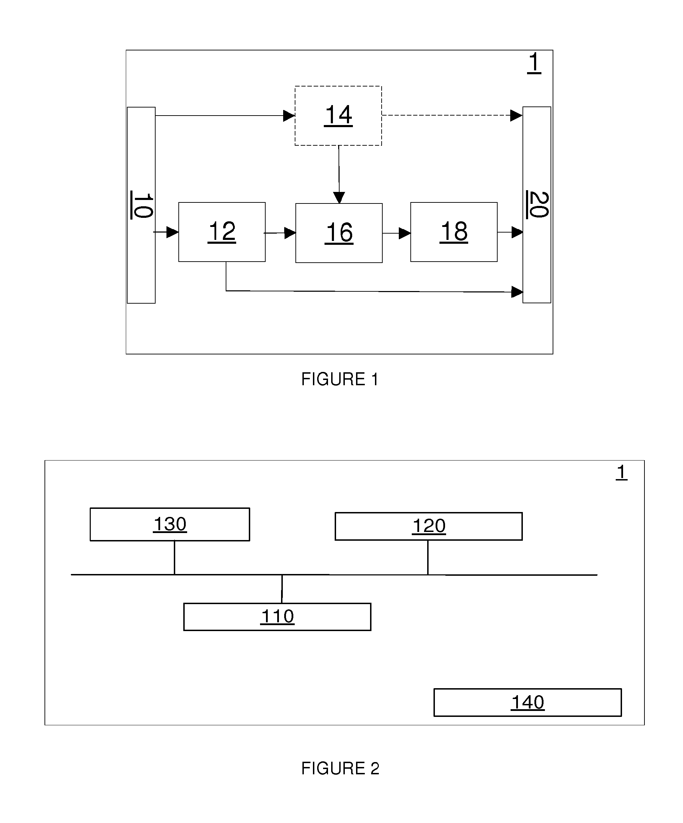

**Figure 1** depicts a processing device 1 for displaying a plurality of videos with respect to spatial and temporal connectivity according to a specific and non-limitative embodiment of the invention. The processing device 1 comprises an input 10 configured to receive at least one video V from a collection of videos. The video V of the collection of videos may be obtained from a source. According to different embodiments of the invention, the source belongs to a set comprising:
- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an picture capturing circuit (e.g. a sensor such as, for example, a CCD (or Charge-Coupled Device) or CMOS (or Complementary Metal-Oxide-Semiconductor)).
The input 10 is linked to a first video decoder 12 configured to display a main video in a main graphical unit wherein the main video MV is selected by a user for reproduction among a collection of videos. The input 10 is further linked to an analysis module 14 configured to generate information relative to spatial and/or temporal relationship between videos. According to a variant the analysis module 14 is external to the processing device 1 and the information is input to the processing device through the input 10. The outputs of the modules 12 and 14 are connected to a module 16 configured to obtain an information representative of spatio-temporal connectivity between the temporal segment currently displayed of the main video and a temporal segment of a secondary video and determine the sizing, structuring, positioning, transparency, overlapping of at least one secondary graphical unit. The second decoder 18 (or a plurality of second decoders) is configured to display the secondary video(s) SV obtained by the module 16 in a second graphical unit according to characteristics determined by the module 16. The first video decoder 12 and the at least one second video decoder 18 are linked to an output 22 so as to be sent to a video display. In the variant where the analysis module is internal 14, the information relative to spatial and/or temporal relationship between videos determined by the analysis module 14 can be stored in a memory or can be sent to a destination. As an example, such information is stored in a remote or in a local memory, e.g. a video memory or a RAM, a hard disk. In a variant, the information is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

Figure 2 represents an exemplary architecture of the processing device 1 according to a specific and non-limitative embodiment of the invention. The processing device 1 comprises one or more processor(s) 110, which is(are), for example, a CPU, a GPU and/or a DSP (English acronym of Digital Signal Processor), along with internal memory 120 (e.g. RAM, ROM, EPROM). The processing device 1 comprises one or several Input/Output interface(s) 130 adapted to display output information and/or allow a user to enter commands and/or data (e.g. a keyboard, a mouse, a touchpad, a webcam, a display); and a power source 140 which may be external to the processing device 1. The processing device 1 may also comprise network interface(s) (not shown).

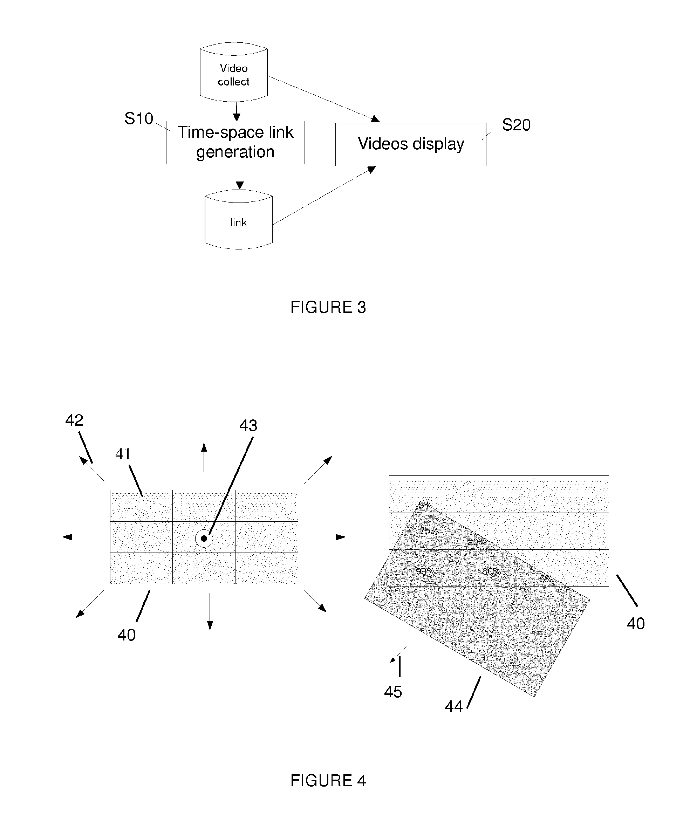

According to an exemplary and non-limitative embodiment of the invention, the processing device 1 further comprises a computer program stored in the memory 120. The computer program comprises instructions which, when executed by the processing device 1, in particular by the processor 110, make the processing device 1 carry out the processing method described with reference to figure 3. According to a variant, the computer program is stored externally to the processing device 1 on a non-transitory digital data support, e.g. on an external storage medium such as a HDD, CD-ROM, DVD, a read-only and/or DVD drive and/or a DVD Read/Write drive, all known in the art. The processing device 1 thus comprises an interface to read the computer program. Further, the processing device 1 could access one or more Universal Serial Bus (USB)-type storage devices (e.g., "memory sticks.") through corresponding USB ports (not shown). According to exemplary and non-limitative embodiments, the processing device 1 is a device, which belongs to a set comprising:
- a mobile device ;
- a communication device ;
- a game device ;
- a tablet (or tablet computer) ;
- a laptop ;
- a still picture camera;
- a video camera ;
- an encoding chip;
- a decoding chip;
- a still picture server;
- a video server (e.g. a broadcast server, a video-on-demand server or a web server) ; and
- a video sharing platform.

Figure 3 represents a flowchart of a method for displaying multiple videos according to a specific and non-limitative embodiment of the invention embodiment of the invention.

The method for displaying a collection of videos in an intuitive and user-friendly way enhancing video browsing relies on two main steps :
- Firstly, finding relations between video clips and recording that information in a structure so that the videos collection can be easily explored;
- Secondly displaying the information by integrating directly on the video display some means to jump from one video to others.
Thus, in a step S10, information relative to spatial and/or temporal relationship between videos is generated, e.g. by the analysis module 14. The terms link, connectivity or relationship are indifferently used in the description. Accordingly, a graph is built where a node corresponds to a temporal segment of videos and where a link corresponds to a score for instance representative of the quality of the spatial relationship such as in a non-limitative example, 80% of matched pixels between main and secondary videos with a sufficient confidence.

Then, in a step S20, a video is presented to a user in a main graphical unit along with link information displayed in a first embodiment as a graphical unit (arrows) or in a second embodiment as properties of at least one second graphical unit displaying a secondary video related to the main video through the link.

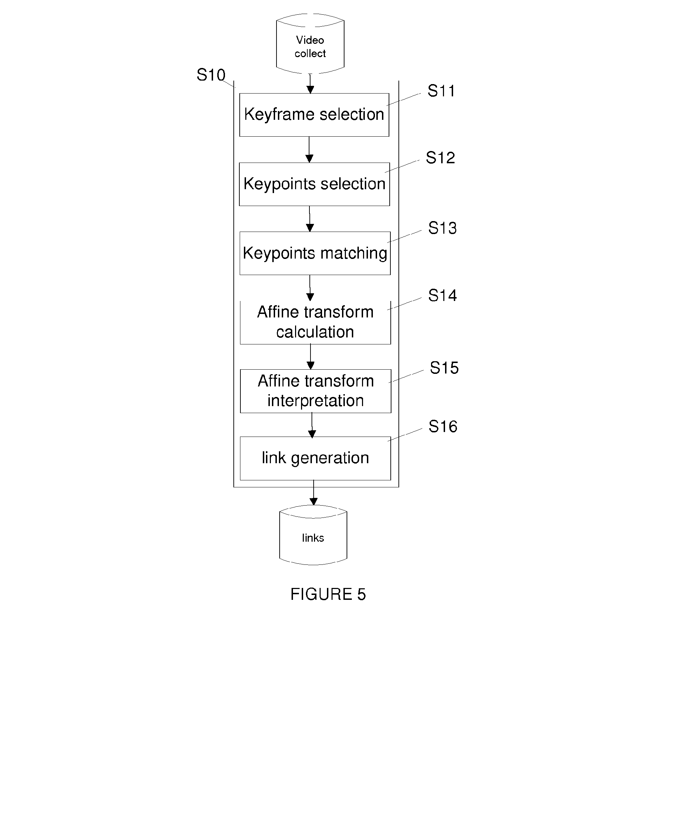

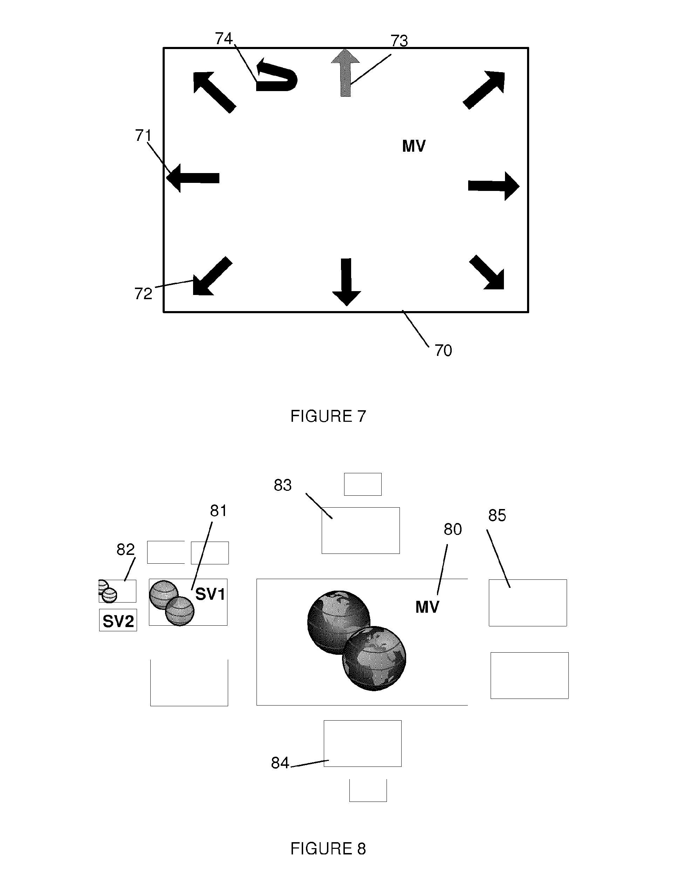

Figure 4 represents an interpretation of the transform between two images through space quantization to obtain a relative positioning of the two images according to a specific and non-limitative embodiment of the invention. A first image 40 of a video is divided in a determined number of rectangles 41, for instance 9 as on figure 4. In a variant, the size of the rectangles is variable. Accordingly, each of the 8 rectangles at the border respectively corresponds to a direction among up, up-right, right, down-right, down, down-left, left, up-left. Each direction is represented by an arrow 42. The ninth rectangle at the center corresponds to a same view of the image 40 and is represented by a circle 43 at the center. To obtain, a coarse positioning of a second image 44 with respect to the first image 40, the percentage of overlapping pixel in each rectangle is computed. As explained hereafter with respect to figure 5, the second image 44 is advantageously aligned with the first image 40 in a preprocessing step through the determination of a transformation between both images. The second image 44 thus corresponds to a down-left view of the first image 40. The information of the down left positioning is presented to a viewer by the arrow 45. Other embodiments of a graphical interface rendering such relative spatial positioning of images is described in figures 7 to 10.

Figure 5 represents a detail of the flowchart depicted on figure 3 according to a specific and non-limitative embodiment of the invention.

The step S10 of time-space link generation is explained according a particularly interesting embodiment wherein the links are described as homography (including affine transformation) between videos.

In a step S11 of key frame selection, the videos of the collection of videos are represented as a sequence of key frames. Since an exhaustive computation of the relative position of all the frames of each video within the dataset is not tractable, the first step is to detect some key frames in order to reduce the cardinality of the input frames set. The man skilled in the art know that step S11 is common in many video processing applications (scene summary, copy detection ...) and many algorithmic solutions exist to achieve it based on clustering plus election of a representative frame, shot detection plus stable frames, motion analysis, etc. Unlike in copy detection, in the context of user generated content of a same event, images within videos that are very different from the previous ones mean that a point of view has been changed or the object has changed. Consequently, a way to overcome the problem of finding an homography between one video and another one is solved by firstly finding temporal segments of the first video and temporal segments of the second one and then secondly by selecting a meaningful key frame for each segment wherein the homography is computed between pair of key frames of videos.

In a step S12 of key points selection, some points of interest are detected and described on each key frame selected in the previous step.

In a step S13 of key points matching, key points of pair of key frames of videos are matched. This is also a common step in image processing (stitching, retrieval ...) and one of the techniques is the well-known SIFT algorithm. This step is done on each pair of key frames.

In a step S14 of affine transform calculation, an affine transform is computed for each pair of key frames in different videos of the collection using matched key points. As the man skilled in art knows such affine transform is represented by 2x2 transformation matrix and a constant displacement vector.

In a step S15 of affine transform interpretation an advantageous processing is disclosed to estimate the relative position into space of the pair of key frames using the homography. The problem to solve is to find the relative position of two images (i.e key frames) while coefficients in the homography matrix stands for some translation and some rotation information. The step proposed here allows a fast geometric interpretation of the relative position between two images. As represented on figure 4, the space is divided into 9 directions 42, 43 where one corresponds to the identity transform 43. Those 9 directions correspond only to a coarse quantization of the potential relative position of two videos, but they are sufficient for video a navigation application. Hence the image 40 is divided into 9 rectangles 41. The principle is to take two masks with the same dimensions as the two images under consideration. Then to transform the first one 44 with the estimated homography and to place it over the second image 40. By quickly computing the overlapping pixels, those with 1 and 1, we can get for each of the nine rectangles the percentage of overlapping pixels, and take a decision on the direction in which we must navigate from the first image to go towards the second one. Advantageously, such coarse computation of the relative positioning of the videos is much more simple than panorama computation known from the prior art where a pixel wise computation is needed between key frames to get a user-friendly result.

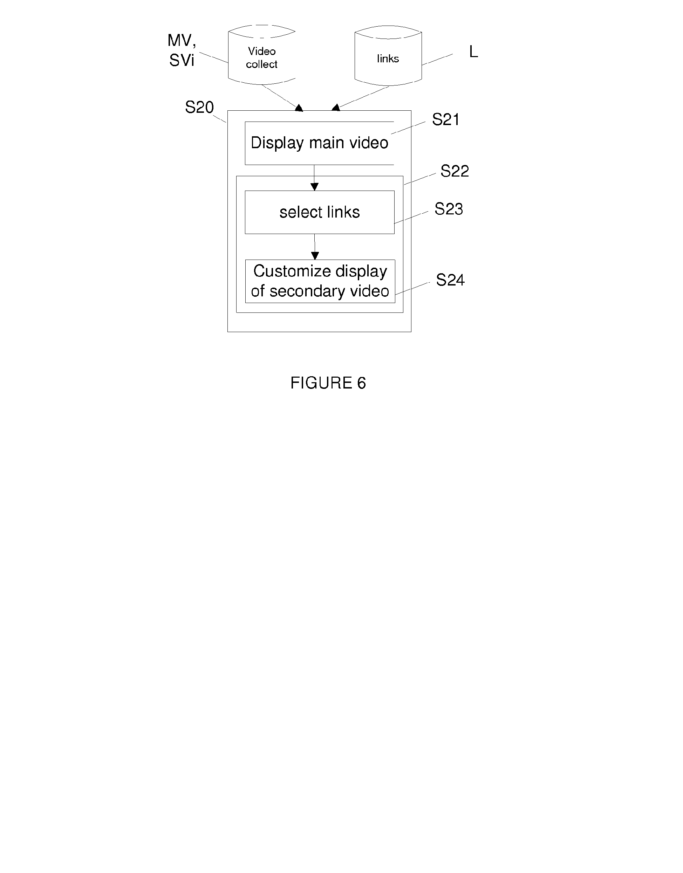

In a step S16 of link generation, information relative to spatial positioning of 2 videos is defined. That information is stored for each pairs of key frames as a metadata or recorded as a graph. Indeed, the previous process is iterated for all the pairs of key frames, hence all the pairs of video segments. A complete connection graph can then be constructed, giving the relationship between all the video segments. Even those with no direct relation can be estimated through transitivity, i.e. pathfinding through the graph. This graph can be appended to the videos as a metadata file and interpreted by the video player as it will be seen later with figure 6. Advantageously, the links can further carry temporal information given by a synchronization step not represented in figure 5,

Figure 6 represents a detail of the flowchart depicted on figure 3 according to a specific and non-limitative embodiment of the invention. The step S20 of video and time-space link visualization is explained according various embodiments.

In a step S21, a video MV is displayed in a graphical unit, i.e. a part of a display means or a part of a screen or a part of a window display, e.g. by the module 12 i.e. the main video decoder. This video is called main video MV and the graphical unit is called main graphical unit. The main graphical unit is advantageously larger than secondary graphical units, placed in the center of the window display. According to a variant, the main video MV is selected by a user in the video among a collection of videos. According to other variant, the main video is automatically selected for reproduction by an application, for instance by selecting the last video viewed or the video the most viewed. The main video MV is split into temporal segments. Thus, when the main video MV is displayed into the main graphical unit, the module 12 is further configured to determine the temporal segment of the main video that is currently displayed.

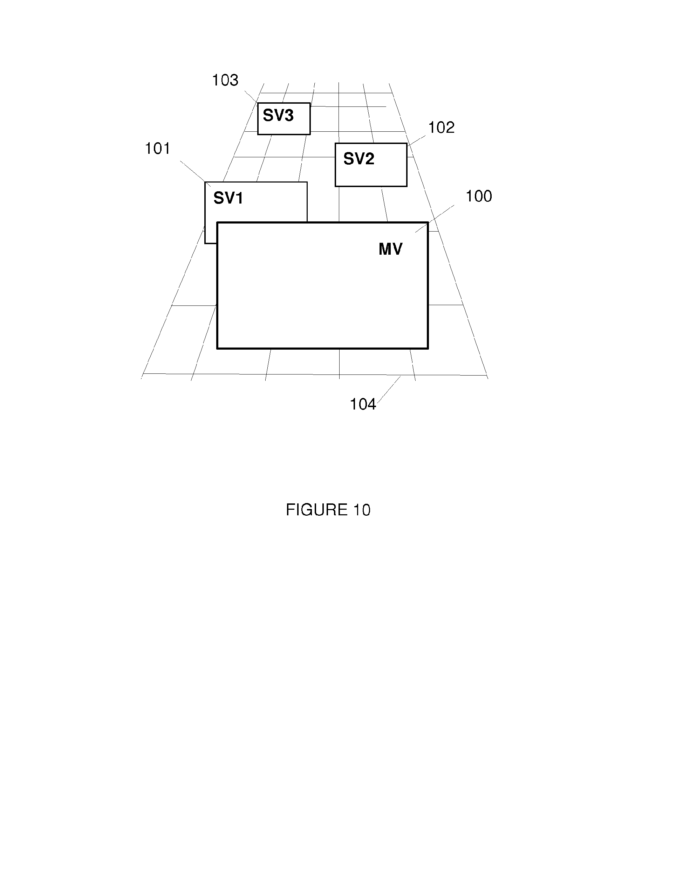

In a step S22, a secondary video SVi is displayed in a secondary graphical unit, i.e. in another part of a display means or another part of a screen or another part of a window display e.g. by the module 18 i.e the secondary video decoder. In the following, a secondary video and the graphical unit presenting the video are indifferently named SV. According to a characteristic particularly advantageous, features of the secondary graphical unit depend on information representative of spatio-temporal connectivity between a pair comprising a main video segment currently displayed and a temporal secondary video segment currently displayed. As detailed with the various embodiments later on detailed, among the features of the graphical units, the size, the structure of the arrangement of graphical units, their relative position, their transparency, or their overlap are disclosed. According to a preferred embodiment, there is more than one secondary graphical unit, for instance from 3 to 12 as represented on figure 10 or figure 8. Accordingly, the arrangement of secondary units further depends on a maximum number of players allowed for a display. According to another advantageous characteristic, the arrangement of players is defined to limit the perceptual disturbance of the viewing experience of main video by a user.

Thus in a substep S23, information representative of spatio-temporal connectivity from the main video is selected. Indeed as explained for the graph, a plurality of links connects the temporal segment of the main video (corresponding to a node in the graph) that is currently displayed with other segments of other videos (corresponding to others nodes) and, in a variant, segments of the main video itself (intra relationship) Advantageously, a score, called connectivity score, is attached to each link according to its relevance. The method is compatible with any metric for estimating the connectivity score. All methods share the hypothesis that a relational graph has been established between the videos of the collection. A graph may determine when, where and in what amount (if this can be quantified) two videos are related (by appearance similarity, action, point of view, semantics etc).

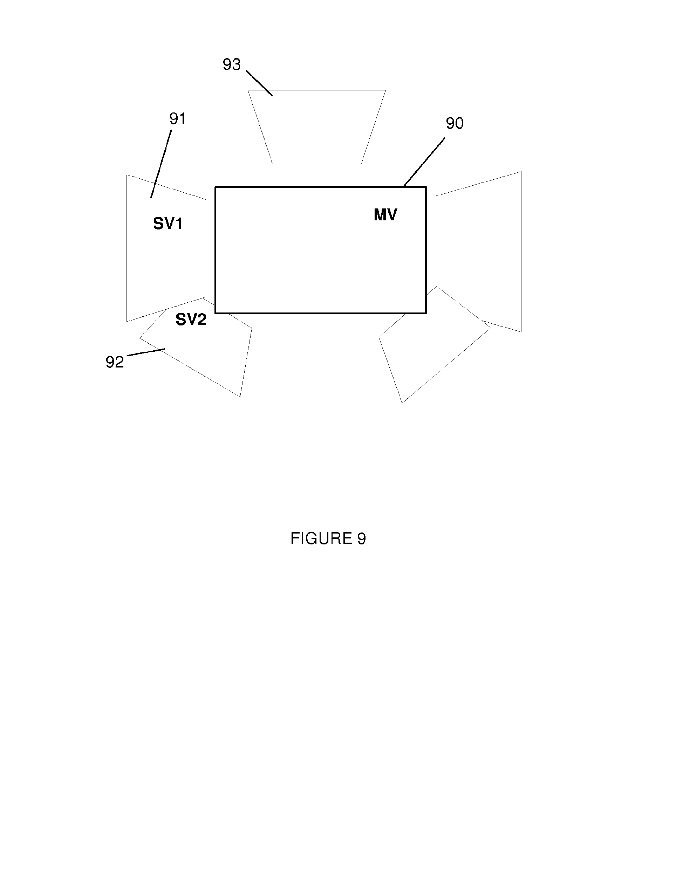

The links are sorted from the highest connectivity score to the lowest connectivity score and the secondary video SVi associated with links of the higher score are selected for visualization by the viewer of the main video MV. According to a first characteristic represented on figure 8, the size of a secondary graphical unit SV1, SV2 increases when the connectivity score increases. According to a second characteristic represented on figure 8, the transparency of a secondary graphical unit SV2, SV1 decreases (from 100% fully transparent for a low score to 0% fully opaque for a high score) when said connectivity score increases. According to a third characteristic represented on figure 9, the overlap of a secondary graphical unit SV2, SV1 decreases when the connectivity score increases. According to a fourth characteristic represented on any figure 8 to 10, the secondary graphical unit SV1 is placed closer to the main graphical unit MV when the connectivity score increases. Thus since the secondary graphical unit SV1 is placed closer to the main graphical unit MV than the secondary graphical unit SV2, the score of SV1 is higher than the score of SV2. According to variants of a fourth characteristic represented on any figure 8 to 10, the main graphical unit MV is centered in the graphical interface presented in the display, the main graphical unit has a higher size than the at least one secondary graphical unit SV1, SV2, and on figure 9 or 10 the main graphical unit MV is placed in the front of the at least one secondary graphical unit SV1, SV2. According to a fifth characteristic, a relative spatial position between the main and secondary video segment is attached to each link and the relative spatial position between the main graphical unit and secondary graphical unit corresponds to the relative spatial position between the main and secondary video segment. Thus as shown on figure 8, secondary graphical unit 81 and 82 are placed on the left of the main graphical unit 80 because their relative spatial positioning as determined in step S15 correspond to left direction, while the secondary graphical unit 83 is placed above the main graphical unit 80 because their relative spatial positioning as determined in step S15 correspond to up direction, the secondary graphical unit 84 is placed below the main graphical unit 80 because their relative spatial positioning as determined in step S15 correspond to down and the secondary graphical unit 85 is placed on the right of the main graphical unit 80 because their relative spatial positioning as determined in step S15 correspond to right direction. The skilled in the art will appreciate that along with sorted links information starting from the current main video segment, the second video segment to display is identified for reproduction in the customized graphical unit in a step S24.

The links are continuously sorted for each current temporal segment of the main video, i.e; each time a new each current temporal segment is reached while the main video is decoded. Accordingly from a first segment of the main video to the following second segment of the main video, links are again sorted, a first and second information are selected and dependent graphical units characteristics, associated secondary video are obtained for each first and second segment for instance by the module 16. According to a sixth characteristic, the characteristics such as size, structure, position, transparency, overlap of the secondary graphical unit continuously varies from a first size, structure, position, transparency, overlap corresponding to a first information to a second size, structure, position, transparency, overlap corresponding to a second information thus allowing a smooth transition between 2 settings of graphical units. In a variant of the sixth characteristic, a straight change occurs from the first to the second graphical unit setting.

According to a seventh characteristic as represented on figure 7, the secondary video is not displayed but an arrow 71, 72, 73, 74 is displayed wherein the position of the arrow represents a spatial link at the current instant. Advantageously the arrow stands for the link with the highest score in the determined direction if such link exists. Thus the arrow 71 represents a link with a secondary video in the left direction; the arrow 72 represents a link with another secondary video in the down-left direction, while the arrow 73 is transparent meaning that no link has been found in the up direction. Advantageously, a circle (as shown in figure 4) or a turn arrow 74 is set corresponding to the identity transform, i.e a secondary video with the same point of view as the main video. Yet in another variant, the arrows are placed in front of the main graphical unit 70 as shown in figure 7 and or around the main graphical as shown in figure 4. Advantageously, the arrow 74 is not placed in the center of the main graphical unit but in a corner, to limit the disturbance of the viewer experience. This variant is also compatible with figure 4 where the circle could be placed in a corner rather than in the center of the image 40.

In a step, not represented in figure 6, a user is able to select among the displayed secondary video a video to display as the main graphical unit, for instance by clicking in the graphical unit with a mouse. Such method allows a dynamic navigation through the collection of videos.

**Figure 7** represents a user interface for displaying a video with temporal and spatial connectivity information according to a specific embodiment of the invention.
When a video is displayed at screen, the graphical interface 70 of the player embeds at the right moment and at the right location within the image some arrows 71, 72, 74 giving a link to other videos, thanks to the embedded metadata. This allows the navigation with a collection of video in an intuitive way through a ready-o-use and user-oriented system.

**Figure 8** represents a user interface for displaying multiple videos with temporal and spatial connectivity information according to a specific embodiment of the invention. The secondary videos SV1, SV2,... are placed on quantified positions 81, 82 according to their similarity to the main video MV placed in a graphical unit 80 at the center. The most similar (first level SV1) videos are placed on the sides 81, 83, 85 with a reduced size and according to their spatial positioning. Less related videos (second level SV2) are hierarchically put with a smaller size 82 on the sides of the secondary videos. In this manner, the user can navigate in a hierarchical manner, where the layout is determined by the connectivity of the graph.

**Figure 9** represents a user interface for displaying multiple videos with temporal and spatial connectivity information according to a specific embodiment of the invention. A principal video MV is played in a main graphical unit 90 and secondary videos SV1, SV2, ... which are related to the main video by their relative position are positioned accordingly and overlapping the common regions 91, 92, 93. As the principal video runs, the strength of this link can vary, new videos appear or disappear, or are repositioned. The transparency of the secondary video SV1, SV2 can be a way of showing the user the level of importance of the link.

**Figure 10** represents a user interface for displaying a video with spatial connectivity information according to a specific embodiment of the invention. The videos SV1, SV2 and SV3 approach to the principal video MV according to their similarity to the main one. This could be semantic similarity but also if at the current time instant they are more or less linked, i.e. they are temporally synchronized. Videos fly back and forth following the relational graph in a 3D space 104.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method, performed by a computer, for displaying a plurality of videos, comprising:
- displaying a main video in a main graphical unit;
- displaying at least one secondary video among said plurality of videos in at least one secondary graphical unit;
**characterized in that** at least a characteristic of said at least one secondary graphical unit among size, structure, position, transparency, overlap with main graphical unit depends on information representative of spatio-temporal connectivity between a main video segment currently displayed and said at least a secondary video segment currently displayed.

2. The method of claim 1 wherein said characteristic of said at least one secondary graphical unit further depends on a maximum number of graphical units.

3. The method of any of claims 1 to 2, wherein said information representative of spatio-temporal connectivity comprises a connectivity score and wherein the size of a secondary graphical unit increases when said connectivity score increases.

4. The method of any of claims 1 to 3, wherein said information representative of spatio-temporal connectivity comprises a relative spatial position between said main and secondary video segment and wherein the relative spatial position between said main graphical unit and a secondary graphical unit corresponds to said relative spatial position between said main and secondary video segment.

5. The method of any of claims 1 to 2 wherein said information representative of spatio-temporal connectivity comprises a connectivity score and wherein the transparency of a secondary graphical unit decreases when said connectivity score increases.

6. The method of any of claims 1 to 2 wherein said information representative of spatio-temporal connectivity comprises a connectivity score and wherein the overlap of a secondary graphical unit with said main graphical unit decreases when said connectivity score increases.

7. The method of any of claims 1 to 2 wherein said information representative of spatio-temporal connectivity comprises a connectivity score and wherein a secondary graphical unit is placed closer to the main graphical unit when said connectivity score increases.

8. The method of any of claims 1 to 2 wherein at least a characteristic of said at least one secondary graphical unit among size, structure and position are quantified.

9. The method of any of claims 1 to 8 wherein at least a characteristic of said at least one secondary graphical unit continuously varies from a first characteristic of said at least one secondary graphical unit corresponding to a first information to a second characteristic of said at least one secondary graphical unit corresponding to a second information.

10. The method of any of claims 1 to 9 wherein the main graphical unit is centered in a display or wherein the main graphical unit has a higher size than said at least one secondary graphical unit or wherein the main graphical unit is placed in the front of said at least one secondary graphical unit.

11. A graphical interface for displaying a plurality of videos on a display means, the graphical interface comprising:
- a main graphical unit displaying a main video;
- at least a secondary graphical unit, each secondary graphical unit displaying a secondary video among said plurality of videos ;
**characterized in that** at least a characteristic of said at least one secondary graphical unit among size, structure, position, transparency, overlap with main graphical unit depends on information representative of spatio-temporal connectivity between a main video segment currently displayed and at least a secondary video segment currently displayed.

12. A device for displaying a plurality of videos on a display means, the device comprising:
- means for (12) displaying a main video in a main graphical unit;
- means for (18) displaying at least one secondary video among said plurality of videos in at least a secondary graphical unit;
**characterized in that** it further comprises means for (16) determining at least a characteristic of said at least one secondary graphical unit among size, structure, position, transparency, overlap with said main graphical unit as a function of information representative of spatio-temporal connectivity between a main video segment currently displayed and at least a secondary video segment currently displayed.

13. A device for displaying a plurality videos on a screen, said device comprising at least one processor (110) configured to:
- display a main video in a main graphical unit;
- display at least one secondary video among said plurality of videos in at least a secondary graphical unit;
**characterized in that** at least a characteristic of said at least one secondary graphical unit among size, structure, position, transparency, overlap with said main graphical unit depends on information representative of spatio-temporal connectivity between a main video segment currently displayed and said at least a secondary video segment currently displayed.

14. A computer program product comprising program code instructions to execute of the steps of the method according to any of claims 1 to 9 when this program is executed on a computer.

15. A processor readable medium having stored therein instructions for causing a processor to perform at least the steps of the method according to any of claims 1 to 9.
